Europäisches Patentamt

European Patent Office

Office européen des brevets

(11) Publication number: **0 365 326**
**A2**

## EUROPEAN PATENT APPLICATION

(21) Application number: **89310764.9**

(51) Int. Cl.⁵: **B32B 27/32**

(22) Date of filing: **19.10.89**

(30) Priority: **19.10.88 GB 8824435**

(43) Date of publication of application:
**25.04.90 Bulletin 90/17**

(84) Designated Contracting States:
**AT BE CH DE ES FR GB IT LI LU NL SE**

(71) Applicant: **V.M.B. LIMITED**
**Blackpole Trading Estate**
**Blackpole Worcester WR3 8SG(GB)**

(72) Inventor: **Baxter, Michael Norman**
**c/o V.M.B. Limited Blackpole Trading Estate**
**Blackpole Worcester WR3 8SG(GB)**

(74) Representative: **Brown, David Alan et al**
**MATHYS & SQUIRE 10 Fleet Street**
**London EC4Y 1AY(GB)**

(54) **Composite plastics film.**

(57) A composite plastics film comprises an inner layer (1) of plastics, such as a polyester or polypropylene film, with a metallic layer (2) on one face, and layers (3, 5) of polyethylene film secured to both fares of the inner layer. The composite film is useful for packaging, particularly food packaging. It has the advantage over conventional metallized film that the polyethylene layer on both faces of the film enables it to be used in processes, such as in bag sealing machines, where it is necessary to bond one surface of the film to the other surface by heat sealing.

## Composite Plastics Film

This invention relates to composite plastics film. More particularly, but not exclusively, the invention relates to plastics film for use in packaging.

Metallized plastics film has desirable properties for many packaging purposes, in particular for food packaging, since the metallic layer provides a barrier to penetration of moisture, oxygen and odours. Polyester, polypropylene or nylon film metallized on one surface with nickel or aluminium is widely used for food packaging. The film is often provided with a layer of high slip polyethylene film laminated onto the metallized surface, to allow the surface to be printed.

A disadvantage of the known film is that it cannot easily be used in machines which require one surface of the film to be bonded to the other surface by heat sealing, for example in bag sealing machines used in the "form, fill and seal" process. The known film can be used only in certain specialised packaging machinery.

It is an object of this invention to provide a composite plastics film which does not have this disadvantage.

This invention consists in a composite plastics film, comprising an inner layer consisting of a plastics film having a metallic layer on one surface, and layers of polyethylene film secured to both surfaces of the inner layer.

The inner layer suitably consists of a polyester, polypropylene or nylon film, or other similar polymeric substrate, metallized on one surface.

The polyethylene film is preferably laminated onto both surfaces of the metallized film.

Suitably, the polyethylene film is a low density, or linear low density, polyethylene film, though in some circumstances a high density film could be used. For some applications, it is desirably to employ polyethylene film with high slip characteristics.

The provision of a polyethylene layer on both surfaces of the composite film enables the film to be used in circumstances where it is necessary to bond one surface of the composite film to the other surface by heat sealing.

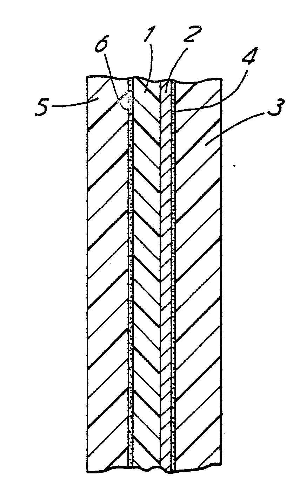

The single figure of the accompanying drawing is a diagrammatic cross-section through a composite film in accordance with one embodiment of the invention.

A polyester, polypropylene or nylon film 1 is metallized on one surface with a layer 2 of metal such as nickel or aluminium. A film 3 of low density or linear low density, polyethylene is laminated onto the metallized surface by means of a layer of adhesive 4. A film 5 of polyethylene, of the same kind as the film 3, is laminated onto the other surface of the film 1 by means of a layer of adhesive 5.

To manufacture the composite film, the metallic layer 2 is deposited on the polyester, polypropylene or nylon film 1 using conventional techniques. Polyethylene film forming the layers 3 and 5 is then laminated onto both surfaces of the metallized film using conventional techniques, such as cold solvent or solventless lamination.

The thicknesses of the components may be chosen in accordance with the desired properties and use of the composite film. Typically, for a film to be used in conventional bag sealing machines, the metallized polyester, polypropylene or nylon film 1 may have an average thickness of 12 micrometres, and the polyethylene film laminated on each surface may have an average thickness of 30 micrometres, giving, allowing for the thickness of the layers of adhesive, an overall thickness of the composite film of about 80 micrometres.

The described composite film has the advantage that it can be used in conventional bag sealing machines. In addition to the known advantages of metallized film, it has been found that the described composite film has the advantage of increased thermal insulating properties. This is particularly useful when the film is used for packaging frozen foods.

## Claims

1. A composite plastics film, comprising an inner layer consisting of a plastics film having a metallic layer on one surface, and layers of polyethylene film secured to both surfaces of the inner layer.

2. A composite film as claimed in Claim 1, in which the inner layer is a polyester or polypropylene film metallized on one surface.

3. A film as claimed in Claim 2, in which the polyethylene film is laminated onto both surfaces of the metallized film.

4. A film as claimed in any one of claims 1 to 3, in which the polyethylene film is low density or linear low density, high slip polyethylene film.

EP 0 365 326 A2